# EUROPÄISCHE PATENTANMELDUNG

(11) **EP 4 722 898 A1**
(43) Veröffentlichungstag der Anmeldung: **08.04.2026**
(21) Anmeldenummer: 24204007.9
(22) Anmeldetag: 01.10.2024
(51) Int. Cl.: G06F 8/65

(54) **VERFAHREN ZUM AKTUALISIEREN ZUMINDEST EINER ERSTEN KONTROLLFUNKTION EINER ERSTEN ELEKTRONISCHEN RECHENEINRICHTUNG IN EINER SCHALTUNGSANORDNUNG ZUM STEUERN EINER MASCHINE, COMPUTERPROGRAMMPRODUKT, COMPUTERLESBARES SPEICHERMEDIUM SOWIE SCHALTUNGSANORDNUNG**

(71) Anmelder: Siemens Aktiengesellschaft, 80333 München (DE)
(72) Erfinder: Fröhlich, Joachim, 85614 Kirchseeon (DE); Rothbauer, Stefan, 86156 Augsburg (DE); Stückjürgen, Christoph, 80807 München (DE); Telschig, Kilian, 81543 München (DE)
(74) Vertreter: Siemens Patent Attorneys

(57) **Zusammenfassung**

Die Erfindung betrifft ein Verfahren zum Aktualisieren zumindest einer ersten Kontrollfunktion (16) einer ersten elektronischen Recheneinrichtung (14) in einer Schaltungsanordnung (10) zum Steuern einer Maschine (12), mit den Schritten: Erzeugen eines ersten Steuersignals (26) zum Steuern der Maschine (12) mittels der ersten versionsälteren Kontrollfunktion (16) der ersten elektronischen Recheneinrichtung (14); Bereitstellen einer ersten versionsneueren Kontrollfunktion (18) zum Steuern der Maschine (12) parallel zur ersten versionsälteren Kontrollfunktion (16) mittels der ersten elektronischen Recheneinrichtung (14); Erzeugen und Übermitteln eines Umschaltsignals (28) von einer Umschaltfunktion (30) der Schaltungsanordnung (10) an die erste elektronische Recheneinrichtung (14); und Erzeugen eines aktualisierten Steuersignals (34) zum Steuern der Maschine (12) mittels der ersten versionsneueren Kontrollfunktion (18) in Abhängigkeit von dem empfangenen Umschaltsignal (28). Ferner betrifft die Erfindung ein Computerprogrammprodukt, ein computerlesbares Speichermedium sowie eine Schaltungsanordnung (10).

## Beschreibung

Die nachfolgende Erfindung betrifft ein Verfahren zum Aktualisieren zumindest einer ersten Kontrollfunktion einer ersten elektronischen Recheneinrichtung einer Schaltungsanordnung zum Steuern einer Maschine gemäß dem geltenden Patentanspruch 1. Ferner betrifft die Erfindung ein entsprechendes Computerprogrammprodukt, ein entsprechendes computerlesbares Speichermedium sowie eine entsprechende Schaltungsanordnung.

Die nachfolgende Erfindung beschäftigt sich insbesondere damit, wie beispielsweise mehrere, linear voneinander abhängige, unterbrechungsfrei laufende Automatisierungsfunktionen beziehungsweise Kontrollfunktionen eines verteilen Cyber-physischen Steuerungssystems (CPS), nachfolgend auch als Schaltungsanordnung bezeichnet, aktualisiert werden können, die über den Versand und Empfang von Daten, insbesondere der sogenannten Nachrichten, in Publish-Subscribe-Kanälen kommunizieren. Solche Cyber-physischen Steuerungssysteme mit insbesondere losgekoppelten Automatisierungsfunktionen, die in Echtzeit arbeiten und durch die kontrollierte physikalische Prozesse bestimmt werden, können beispielsweise auf der Grundlage des sogenannten Data distribution Service (DDS) mit RTI-Kontext implementiert werden.

Mehrere, beispielsweise zumindest zwei, miteinander kommunizierende Automatisierungsfunktionen/Kontrollfunktionen sollen dabei nahtlos, konsistent und sicher während des kontinuierlichen Betriebs der Schaltungsanordnung aktualisiert werden können. Zwei Automatisierungsfunktionen können kommunizieren, wenn sie mindestens einen Publish-Subscribe-Kanal teilen. Ein Upgrade/Aktualisierung soll dabei weder für den kontrollierten physikalischen Prozess, also insbesondere das Steuern der Maschine, noch die Schaltungsanordnung selbst beeinträchtigen, wenn eine Aktualisierung der Kontrollfunktion die Schnittstelle der Kontrollfunktion auf eine Weise ändert, die die Interoperabilität (Kompatibilität, zweier oder mehrere miteinander kommunizierenden Kontrollfunktionen) beeinträchtigt. Um Inkompatibilitäten zu vermeiden, müssen die Kontrollfunktionen, die direkt oder indirekt von einer Schnittstellenspezifikationsänderung betroffen sind, in einem verteilten Upgrade aktualisiert werden.

Charakteristische Eigenschaften von der Schaltungsanordnung, deren unterbrechungsfrei laufende Kontrollfunktion nahtlos und konsistent aktualisiert werden sollen, sind insbesondere die zeitgetriebene Ausführung, wobei Systemzyklen, beispielsweise sogenannte Uhren, zwischen den einzelnen Rechenkonten, welche nachfolgend auch als elektronische Recheneinrichtung oder Nodes bezeichnet werden, synchronisiert sind. Des Weiteren ist die anwendungsspezifische Länge eines Taktintervalls für die Reihenfolge -, genau einmalige, typkonforme Zustellung von Daten in Publish-Subscribe Datenkanälen konsistent zu halten. Des Weiteren sind ein gerichteter azyklischer Graph (DAG), Upgrade-relevante Kontrollfunktionen und Datenflüsse zu nutzen. Alle Pfade zwischen je zwei direkt oder indirekt zusammenhängenden Kontrollfunktionen sind dabei gleich lang. Die Eigenschaften 1 bis 3 sind Stand der Technik. Die vierte Eigenschaft schließt problematische Kopplungen durch zirkuläre Abhängigkeiten zwischen Kontrollfunktionen aus, was als Anti-Muster im modularen Systemdesign angesehen wird. Die fünfte Eigenschaft ermöglicht konsistente Upgrades entlang gleichlanger Kommunikationspfade zwischen zwei abhängigen Kontrollfunktionen, das heißt über Datenströme, die mehrere Zwischen-Kontrollfunktionen zwischen zwei abhängigen Kontrollfunktionen passieren.

Die Aktualisierung mehrerer miteinander kommunizierender Kontrollfunktionen, die unterbrechungsfrei in einer Schaltungsanordnung laufen, bei der erstens ein Upgrade der Kontrollfunktion ein Dateninterface ändert und damit die Kontrollfunktionsinteroperabilität aufhebt, und bei der zweitens eine Kontrollfunktion in jeder geeigneten Sprache programmiert werden kann und nicht nur in einer spezifizierten Frage, ist dabei auch im Stand der Technik nicht beantwortet.

Auf einem programmierbaren Logik Controller (PLC) können einzelne Funktionsblöcke während der Laufzeit des Logik Controllers ausgetauscht werden, ohne dass der Logik Controller selbst angehalten wird. Während auf einem Logik Controller beispielsweise zwischen zwei Versionen von einzelnen Funktionsblöcken während des Systemzyklus umgeschaltet werden kann, bietet die Controller-Laufzeit keine Unterstützung für erstens die Koordinierung von Upgrades mehrerer abhängiger, kommunizierender Funktionsblöcke, zweitens für den Schutz von Upgrades durch entsprechende On-Field-Tests und drittens für nahtlose, stoßfreie Übergänge von der Funktionsblock-Version zu einer anderen Funktionsblock-Version.

Aufgabe der vorliegenden Erfindung ist es, ein Verfahren, ein Computerprogrammprodukt, ein computerlesbares Speichermedium sowie eine Schaltungsanordnung zu schaffen, mittels welchen ein verbessertes Aktualisieren zumindest einer ersten Kontrollfunktion einer ersten elektronischen Recheneinrichtung in einer Schaltungsanordnung zum Steuern der Maschine realisiert werden kann.

Diese Aufgabe wird durch ein Verfahren, ein Computerprogrammprodukt, ein computerlesbares Speichermedium sowie eine Schaltungsanordnung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Aktualisieren zumindest einer ersten Kontrollfunktion einer ersten elektronischen Recheneinrichtung in einer Schaltungsanordnung zum Steuern einer Maschine. Es wird ein erstes Steuersignal zum Steuern der Maschine mittels der ersten versionsälteren Kontrollfunktion der ersten elektronischen Recheneinrichtung erzeugt. Es erfolgt das Bereitstellen einer ersten versionsneueren Kontrollfunktion zum Steuern der Maschine parallel zur ersten versionsälteren Kontrollfunktion mittels der ersten elektronischen Recheneinrichtung. Es erfolgt das Erzeugen und Übermitteln eines Umschaltsignals von einer Umschaltfunktion der Schaltungsanordnung an die erste elektronische Recheneinrichtung. Es wird ein aktualisiertes Steuersignal zum Steuern der Maschine mittels der ersten versionsneueren Kontrollfunktion in Abhängigkeit von dem empfangenen Umschaltsignal erzeugt.

Mit anderen Worten kann somit ein verbessertes Aktualisieren der ersten elektronischen Recheneinrichtung durchgeführt werden, indem insbesondere ein nahtloses Umschalten zwischen der ersten versionsälteren Kontrollfunktion und der ersten versionsneueren Kontrollfunktion durchgeführt wird. Nach dem Aktualisieren kann beispielsweise die erste versionsältere Kontrollfunktion gelöscht werden.

Mit nochmals anderen Worten bildet die erste versionsältere Kontrollfunktion zunächst eine Primärsteuerungsfunktion für die Maschine. Die erste versionsneuere Kontrollfunktion bildet eine Sekundärsteuerung für die Maschine. Die Steuersignale der ersten versionsneueren Kontrollfunktion werden somit zunächst im Normalbetrieb beispielsweise nicht direkt an die Maschine geschickt. Nachdem die erste versionsältere Kontrollfunktion aktualisiert wurde, wird wiederum die Steuerung an die erste versionsneuere, und somit aktualisierte, Kontrollfunktion übergeben.

Dies ermöglicht insbesondere, dass innerhalb der ersten elektronischen Recheneinrichtung zwei Kontrollfunktionen bereitgestellt werden können, welche unabhängig voneinander arbeiten.

Die erste versionsältere Kontrollfunktion übernimmt im Normalbetrieb die Steuerung der Maschine. Die erste versionsneuere Kontrollfunktion kann beispielsweise vor dem eigentlichen Umschalten bereits getestet werden. Die erste versionsältere und die versionsneuere Kontrollfunktion sind somit parallel in der ersten elektronischen Recheneinrichtung abgespeichert. Nach dem Umschalten erfolgt wiederum die Übergabe der Steuerung von der ersten versionsälteren Kontrollfunktion an die nun aktualisierte versionsneuere erste Kontrollfunktion. Die elektronische Recheneinrichtung befindet sich dann wieder im Normalbetrieb, sodass die Steuerung der Maschine über die primäre versionsneuere erste Kontrollfunktion erfolgt.

Dabei kann insbesondere vorgesehen sein, dass die Kontrollfunktionen, welche auch als Automationsfunktionen bezeichnet werden können, entsprechend attributiert bereitgestellt werden. Attribute umfassen dabei Versionen und Rang, beispielsweise primär oder sekundär. Primäre und sekundäre Instanzen derselben Kontrollfunktion in unterschiedlichen Versionen laufen parallel. Nur primäre Kontrollfunktionen bilden das produktive Steuerungssystem für die Schaltungsanordnung im Normalbetrieb. Eine Instanz der Kontrollfunktion startet als Sekundäre, bevor sie während eines Upgrades zur Primären wird. Die primäre Kontrollfunktion, die während des Upgrades ersetzt werden soll, wird dann zur Sekundären. Die Kontrollfunktionen tauschen dabei attributierte Daten aus. Attribute umfassen dabei Version und Rang der Instanz, die die Daten sendet. Primäre Kontrollfunktionen tauschen ferner primäre Daten aus. Parallellaufende sekundäre Kontrollfunktionen tauschen sekundäre Daten aus. Sekundäre Kontrollfunktionen werden zu primären Daten von primären Kontrollfunktionen, die nicht aktualisiert werden sollen. Die primäre Instanz einer Kontrollfunktion, die beispielsweise ein Aktor ist, steuert die physikalische Umgebung, das heißt ihre Datenausgänge sind aktiviert (offen, nicht stumm). Die Datenausgänge der sekundären Kontrollfunktion sind dabei deaktiviert (geschlossen, stumm). Die Datenausgänge aller anderen Kontrollfunktionen, primär oder sekundär, sind offen. Testketten von sekundären Kontrollfunktionen, die nicht als Steuersignale für die Maschine genutzt werden, werden beispielsweise mit aktivierten Datenausgängen ausgeführt. Daher können sekundäre Kontrollfunktionen im Feld getestet werden, während sie parallel zu ihren primären Instanzen laufen und bevor sie Primär-Instanzen werden. Die Umschaltfunktion ist wiederum eine spezielle Funktion der Schaltungsanordnung, welche die Aktualisierung koordiniert und verteilt.

Die Koordination, unterbrechungsfreie und konsistente Aktualisierung von Kontrollfunktionen, die der Schaltungsanordnung angehören, sind aus mehreren Gründen erforderlich. Verschiedene Automatisierungsfunktionen und verschiedene Versionen derselben Kontrollfunktion haben in der Regel unterschiedliche Vorbereitungs-, Start- und Abschaltzeiten. In Feldtests von sekundären Kontrollfunktionen eines verteilten Upgrades sind in der Regel unterschiedliche Ausführungszeiten erforderlich. Die Aktualisierungskoordination ist dabei die Aufgabe der Umschaltfunktion. Diese empfängt dabei beispielsweise über einen entsprechenden Kommunikationskanal aktualisierungsrelevante Zustandsdaten für die erste Kontrollfunktion und eine zweite Kontrollfunktion und sendet die entsprechenden Aktualisierungsbefehle an die erste Kontrollfunktion und die zweite Kontrollfunktion über entsprechende weitere Kommunikationskanäle. Die entsprechenden Kanäle dienen zum Austausch von kontrollfunktionsspezifischen Daten zwischen Paaren von Kontrollfunktionen in unterschiedlichen Aktualisierungsversionen. Dabei können beispielsweise Zustandskontrollfunktionen Zustandsdaten zwischen den einzelnen Instanzen während der Vorbereitung für einen Versionswechsel austauschen. Aktualisierbare Kontrollfunktionen, unabhängig davon, ob ihre Anwendungslogik entweder ohne Zustand oder mit Zustand ist, durchlaufen den gleichen grundlegenden Lebenszyklus, der als Zustandsmaschine beschrieben werden kann. Laufende Kontrollfunktionen operieren dabei in einen von zwei Betriebsarten, entweder im sogenannten Normalbetriebsmodus oder im Aktualisierungs-Betriebsmodus. Der Aktualisierungs-Betriebsmodus ermöglicht es den ersten Kontrollfunktionen und den zweiten Kontrollfunktionen aller aktualisierungsrelevanten Kontrollfunktionen, miteinander über eine gemeinsame Aktualisierungsfunktion, insbesondere der Umschaltfunktion, zu kommunizieren, welches die verteilen Upgrades koordiniert. Damit ein Upgrade unterbrechungsfrei und konsistent läuft, ist der Aktualisierungs-Betriebsmodus in weitere Untermodi, insbesondere sogenannte Teilzustände, unterteilt. Bei einer unterbrechungsfreien Aktualisierung sind in allen Teilzuständen und in jedem Systemschritt, das heißt insbesondere in jedem Zyklus einer systemabhängigen Länge, zum Beispiel 10 ms, primäre und sekundäre Kontrollfunktionen durchzuführen, Beispielsweise ist eine Steuerung, insbesondere Prozesssteuerung, durchzuführen. Dabei kann eine Kontrollfunktion ihren Teil der gesteuerten, physikalischen Prozesse entsprechend berechnen. Ebenfalls ist eine Prozessüberwachung durchzuführen. Die Kontrollfunktion überwacht dabei Eigenschaften von kontrollfunktions-relevanten Variablen, die eine unterbrechungsfreie konsistente Aktualisierung bewahren müssen. Gleichrangige Kontrollinstanzen, insbesondere solche mit Anwendungsstatus, können Zustandsdaten austauschen, einschließlich Überwachungszustände, und sich über Kommunikationskanäle koordinieren. Im Aktualisierungs-Betriebsmodus, also wenn ein Wechsel der Version vorbereitet wird, kann eine erste Kontrollfunktion den gesteuerten, physikalischen Prozess und die kontrollfunktionsbezogene Systemteile in einen Zustand bringen, der einen nahtlosen Versionswechsel ermöglicht, was einen nahtlosen Übergang der Umgebungssteuerung bedeutet. Ferner kann eine sekundäre Kontrollfunktion sich vorbereiten und Tests durchführen, bevor die Umgebungssteuerung übergeben wird. Kontrollfunktionen können interne Datenproben und externe Datenproben als Kontrollfunktionen verwenden, um beispielsweise In-Field-Tests von Eingangsdaten, Ausgangsdaten, interne Daten und Systemdaten und für das Eingreifen, wenn erforderlich, nutzen. Primäre und sekundäre Instanzen aller aktualisierungsrelevanten Kontrollfunktionen veröffentlichen berechnete Daten in den jeweiligen Veröffentlichungs-Abonnementkanälen. Alle Datenausgänge der aktualisierungsrelevanten Kontrollfunktionen sind aktiviert, insbesondere offen beziehungsweise auf "laut" geschaltet, aber die Datenausgänge der zweiten Kontrollfunktion von der aktualisierenden Kontrollfunktion sind deaktiviert, insbesondere geschlossen und stumm. Dies ermöglicht In-Field-Tests, also eine Überwachung, in langen Ketten von parallelen sekundären Instanzen von Upgrade-relevanten Kontrollfunktionen, die mit ihren primären Kontrollfunktions-Instanz-Pendants laufen. Auf diese Weise können Upgrade-fähige Kontrollfunktionen in Ketten paarweise aktualisiert werden, das heißt zwischen Paaren von versionsälteren und aktualisierten Versionen der gleichen Kontrollfunktion, insbesondere beginnend mit einer sogenannten Wurzelkontrollfunktion, das heißt eine Kontrollfunktion ohne Vorfahr-Kontrollfunktionen einer Kette von Upgrade-relevanten Kontrollfunktionen und endend mit einer Untergruppe der Kontrollfunktion, welche auch als Sub-Kontrollfunktion bezeichnet wird.

In der Schaltungsanordnung werden elektronische Recheneinrichtungen bereitgestellt, welche auch als Nodes bezeichnet werden. In einem Netzwerk bezeichnet eine Node (auch Knoten genannt) ein Gerät, das Daten senden oder empfangen kann. Nodes können physische Geräte sein, wie Computer, Server, Router, Switches, Hubs, Firewalls, Sensoren, Aktuatoren, Mobiltelefone oder andere vernetzte Geräte. Nodes können auch virtuelle Geräte sein, die in einer Software-Simulation oder in einer Cloud-Infrastruktur ausgeführt werden. In einem Netzwerk können Nodes miteinander verbunden sein und Daten über verschiedene Kommunikationsmittel austauschen, wie z.B. Kabel, Funkverbindungen, Glasfaserkabel oder andere Übertragungsmedien. Die Rolle einer Node im Netzwerk hängt von der Art des Netzwerks und den Anforderungen an die Kommunikation und Zusammenarbeit zwischen den Nodes ab. So können bestimmte Nodes beispielsweise als Server fungieren, während andere Nodes als Clients agieren. Andere Nodes können als Router oder Switches fungieren, die Datenverkehr weiterleiten und Netzwerktopologien verwalten. Insgesamt sind Nodes die Grundbausteine eines Netzwerks und ermöglichen den Austausch von Daten und die Zusammenarbeit zwischen verschiedenen Geräten und Systemen, beispielsweise untereinander oder mit der Maschine.

In der nachfolgenden Beschreibung werden die unterschiedlichen Kontrollfunktionen auch weiteren elektronischen Recheneinrichtung zugeschrieben. Dies dient lediglich der besseren Verständlichkeit. Es ist selbstverständlich auch möglich, dass beispielsweise die erste Kontrollfunktion, eine zweite Kontrollfunktion und die Umschaltfunktion auf einer einzigen elektronischen Recheneinrichtung abgearbeitet werden und somit lediglich unterschiedliche Ressourcen der einen elektronischen Recheneinrichtung verwenden.

Gemäß einer vorteilhaften Ausgestaltungsform wird eine Bereitschaftsinformation zum Übernehmen der Steuerung durch die erste versionsneuere Kontrollfunktion an die Umschaltfunktion übermittelt wird das Umschaltsignal erst nach dem Empfangen der Bereitschaftsinformation durch die Umschaltfunktion erzeugt und übermittelt wird. Mit anderen Worten ist vorgesehen, dass erst nach dem Empfang der Bereitschaftsinformation durch die Umschaltfunktion das Umschaltsignal erzeugt und übermittelt wird. Insbesondere ist vorgesehen, dass auch die versionsältere Kontrollfunktion eine Bereitschaftsinformation an die Umschaltfunktion übermittelt und erst dann das Umschaltsignal erzeugt wird. Somit kann beispielsweise verhindert werden, dass bereits vor der Bereitschaft zur Übernahme eine Übergabe der Steuerung von der versionsälteren ersten Kontrollfunktion zur versionsneueren ersten Kontrollfunktion durchgeführt wird. Somit kann ein sicheres und nahtloses Umschalten sowie ein sicherer nahtloser Versionswechsel zwischen den Kontrollfunktionen realisiert werden.

In einer weiteren vorteilhaften Ausgestaltungsform ist vorgesehen, dass eine Übernahmeinformation, dass die Steuerung durch die erste versionsneuere Kontrollfunktion übernommen wurde, von der ersten elektronischen Recheneinrichtung an die Umschaltfunktion übermittelt wird. Des Weiteren kann auch eine Übergabeinformation von der versionsälteren Kontrollfunktion an die Umschaltfunktion übermittelt werden. Die Umschaltfunktion wird somit in Kenntnis gesetzt, dass die Übernahme stattgefunden hat und kann beispielsweise weitere Aktionen, beispielsweise das Aktualisieren weiterer Kontrollfunktonen oder das Löschen der versionsälteren ersten Kontrollfunktion initiieren.

Ebenfalls vorteilhaft ist, wenn die Schaltungsanordnung als eine Publish-Subscribe-Architektur bereitgestellt wird. Eine Publish-Subscribe-Architektur (auch bekannt als Pub-Sub) ist dabei ein Architekturmuster, bei dem die Nachrichtübermittlung zwischen den Komponenten, mit anderen Worten der elektronischen Recheneinrichtung der Schaltungsanordnung, asynchron erfolgt. In einer solchen Architektur gibt es dabei drei Rollen, den sogenannten Verleger (Publisher), den Abonnenten (Subscriber) und den Broker. Der Verleger veröffentlich dabei Nachrichten mit einem bestimmten topic. Insbesondere kann der Verleger hierbei als übergeordnete elektronische Recheneinrichtung angesehen werden, welche die Aktualisierungsdaten zur Verfügung stellt. Der Broker ist für die Weiterleitung der Nachrichten an alle Abonnenten zuständig, die sich für dieses Thema angemeldet haben. Der Broker kann im vorliegenden Ausführungsbeispiel insbesondere als die Umschaltfunktion angesehen werden. Die Abonnenten interessieren sich für eine oder mehrere Themen und erhalten automatisch alle veröffentlichten Nachrichten zu den von ihnen abonnierten Themen. Mit anderen Worten ist im folgenden Ausführungsbeispiel der Abonnent eine jeweilige elektronische Recheneinrichtung beziehungsweise eine jeweilige Kontrollfunktion. Das Hauptmerkmal einer solchen Pub-Sub-Architektur ist die Entkopplung von den Verlegern und den Abonnenten, was eine lose Kopplung ermöglicht und die Skalierbarkeit der Schaltungsanordnung erhöht. Die Verleger müssen sich nicht um die Anzahl der Abonnenten kümmern und die Abonnenten müssen sich nicht darum kümmern, woher die Nachrichten kommen. Der Broker übernimmt diese Aufgaben und ermöglicht so eine flexible und skalierbare Architektur.

Weiterhin vorteilhaft ist, wenn die Schaltungsanordnung mit zumindest einer zweiten elektronischen Recheneinrichtung zum Steuern der Maschine bereitgestellt wird, wobei die zweite elektronische Recheneinrichtung abhängig vom ersten Steuersignal der ersten elektronischen Recheneinrichtung ist. Mit anderen Worten können beispielsweise mehrere elektronische Recheneinrichtungen, insbesondere die zwei elektronischen Recheneinrichtungen, innerhalb der Schaltungsanordnung bereitgestellt werden. Die Maschine wird dabei auf Basis der zwei elektronischen Recheneinrichtungen gesteuert. Die zweite elektronische Recheneinrichtung ist jedoch auf entsprechende Signale von der ersten elektronischen Recheneinrichtung angewiesen und bildet somit eine Untergruppe für die erste elektronische Recheneinrichtung. Somit kann auch in einer solchen Datenflussgruppe zuverlässig eine Aktualisierung, insbesondere zumindest der ersten elektronischen Recheneinrichtung, durchgeführt werden.

In einer weiteren vorteilhaften Ausgestaltungsform ist vorgesehen, dass ein Umschalten zu einer zweiten versionsneueren Kontrollfunktion der zweiten elektronischen Recheneinrichtung zeitlich nach dem Umschalten zur ersten versionsneueren Kontrollfunktion durchgeführt wird. Insbesondere da die zweite elektronische Recheneinrichtung und somit auch die zweite versionsältere Kontrollfunktion der zweiten elektronischen Recheneinrichtung abhängig von entsprechenden Signalen der ersten elektronischen Recheneinrichtung ist, ist es notwendig, dass zuerst die erste elektronische Recheneinrichtung aktualisiert wird, sodass es zu keinen falschen Steuerungssignalen von der zweiten elektronischen Recheneinrichtung kommt. Wenn dann die erste Kontrollfunktion der ersten elektronischen Recheneinrichtung aktualisiert ist, erfolgt die Aktualisierung der zweiten Kontrollfunktion der zweiten elektronischen Recheneinrichtung. Somit kann ein sicherer Übergang von Aktualisierungen der ersten elektronischen Recheneinrichtung und der zweiten elektronischen Recheneinrichtung durchgeführt werden.

Eine weitere vorteilhafte Ausgestaltungsform sieht vor, dass eine Aktualisierung der ersten Kontrollfunktion der zweiten elektronischen Recheneinrichtung in Abhängigkeit von einer Steuerung durch die Umschaltfunktion durchgeführt wird. Mit anderen Worten bildet die Umschaltfunktion ein zentrales Modul zur Steuerung der Aktualisierung sowohl der ersten Kontrollfunktion der ersten elektronischen Recheneinrichtung als auch der ersten Kontrollfunktion der zweiten elektronischen Recheneinrichtung. Die Umschaltfunktion kennt insbesondere somit die Zustände der unterschiedlichen elektronischen Recheneinrichtung und kann auf Basis deren Zustände die Aktualisierung steuern und koordinieren.

Weiterhin vorteilhaft ist, wenn ein Umschalten der zweiten versionsälteren Kontrollfunktion zur zweiten versionsneueren Kontrollfunktion in Abhängigkeit von einer Steuerung durch die Umschaltfunktion durchgeführt wird. Der Abhängigkeitsplan umfasst dabei insbesondere entsprechende Datenflussbeziehungen beziehungsweise Abhängigkeiten voneinander. Beispielsweise kann der Abhängigkeitsplan umfassen, dass die zweite elektronische Recheneinrichtung als Untergruppe für die erste elektronische Recheneinrichtung ausgebildet ist. Mit anderen Worten nutzt die zweite elektronische Recheneinrichtung die entsprechenden Signale der ersten elektronischen Recheneinrichtung, um weiter Steuersignale für die Maschine zu erzeugen. Dieser Abhängigkeitsplan kann insbesondere der Umschaltfunktion übermittelt werden. Somit kann die Umschaltfunktion in Abhängigkeit von dem Abhängigkeitsplan zuverlässig die Aktualisierung koordinieren und steuern.

Ferner hat es sich als vorteilhaft erwiesen, wenn die Schaltungsanordnung mit einer Vielzahl von elektronischen Recheneinrichtungen zum Steuern der Maschine bereitgestellt wird, wobei die Aktualisierung der Vielzahl von elektronischen Recheneinrichtungen in Abhängigkeit von einem Abhängigkeitsplan der elektronischen Recheneinrichtungen zueinander mittels der Umschaltfunktion durchgeführt wird. Somit kann vorgesehen sein, dass die Schaltungsanordnung auch mehr als zwei elektronische Recheneinrichtungen aufweist, wobei unterschiedliche Abhängigkeiten dieser elektronischen Recheneinrichtung zum Erzeugen der Steuersignale für die Maschine bereitgestellt sind. Auf Basis des Abhängigkeitsplans der unterschiedlichen elektronischen Recheneinrichtungen zueinander kann somit eine Koordinierung des Aktualisierens der einzelnen Kontrollfunktionen der jeweiligen elektronischen Recheneinrichtung mittels der Umschaltfunktion durchgeführt werde. Somit kann die Umschaltfunktion als Koordinator bereitgestellt werden, um ein nahtloses und zuverlässiges Aktualisieren der unterschiedlichen Kontrollfunktionen der Vielzahl von elektronischen Recheneinrichtungen durchführen zu können.

Eine weitere vorteilhafte Ausgestaltungsform sieht vor, dass in einem sequentiellen Datenfluss vorrangige Kontrollfunktionen zeitlich vor nachrangigen Kontrollfunktionen aktualisiert werden. Es kann eine entsprechende zeitliche Abfolge für die Aktualisierung der Kontrollfunktionen bereitgestellt werden. Dies verhindert insbesondere, dass es zu Fehlsteuerungen der nachrangigen Kontrollfunktionen kommen kann, da diese beispielsweise auf Steuersignale der vorrangigen Kontrollfunktion angewiesen sind.

Ebenfalls vorteilhaft ist, dass gleichrangige Kontrollfunktionen von elektronischen Recheneinrichtungen aktualisiert werden. Insbesondere werden somit voneinander unabhängige Kontrollfunktionen gleichzeitig aktualisiert. Somit können in jedem Zeitschritt nicht nur eine elektronische Recheneinrichtung aktualisiert, sondern sollten elektronische Recheneinrichtungen sich auf der gleichen Datenflussebene befinden, so können diese gleichzeitig aktualisiert werde. Dies ermöglicht ein schnelles und dennoch zuverlässiges Aktualisieren der gesamten Schaltungsanordnung.

In einer weiteren vorteilhaften Ausgestaltungsform ist vorgesehen, dass zumindest die erste versionsneuere Kontrollfunktion vor einer Übernahme der Steuerung getestet wird. Es können auch die anderen versionsneueren Kontrollfunktionen, auch unabhängig von der ersten Kontrollfunktion, getestet werden. Somit kann ein Test der versionsneueren Kontrollfunktion durchgeführt werden, und, bevor es zu einer tatsächlichen Aktualisierung uns somit zur Übernahme der Steuerung der Maschine kommt, die Zuverlässigkeit und die Funktionstauglichkeit überprüft werden. Dies verhindert ein nicht korrekte Übernahm der Steuerung der Maschine.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln zum Durchführen eines Verfahrens nach dem vorherigen Aspekt. Dabei können die Programmcodemittel für die Umschaltfunktion und/oder die zumindest eine elektronische Recheneinrichtung und/oder eine übergeordnete elektronische Recheneinrichtung bereitgestellt und abgearbeitet werden.

Weiterhin betrifft die Erfindung auch ein computerlesbares Speichermedium mit zumindest dem Computerprogrammprodukt nach dem vorhergehenden Aspekt.

Ein nochmals weiterer Aspekt der Erfindung betrifft eine Schaltungsanordnung zum Steuern einer Maschine, mit zumindest einer ersten elektronischen Recheneinrichtung und einer Umschaltfunktion, wobei die Schaltungsanordnung zum Durchführen eines Verfahrens nach dem vorherigen Aspekt ausgebildet ist. Insbesondere wird das Verfahren mittels der Schaltungsanordnung durchgeführt.

Vorteilhafte Ausgestaltungsformen des Verfahrens sind als vorteilhafte Ausgestaltungsformen des Computerprogrammprodukts, des computerlesbaren Speichermediums sowie der Schaltungsanordnung anzusehen. Die Schaltungsanordnung weist hierzu gegenständliche Merkmale auf, um entsprechende Verfahrensschritte durchführen zu können.

Unter einer Recheneinheit/elektronische Recheneinrichtung/Node kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Hier und im Folgenden kann ein künstliches neuronales Netzwerk als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibungen sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: ein schematisches Blockschaltbild gemäß einer Ausführungsform einer Schaltungsanordnung;
- FIG 2: ein weiteres schematisches Blockschaltbild gemäß einer weiteren Ausführungsform einer Schaltungsanordnung;
- FIG 3: ein schematisches Ablaufdiagramm gemäß einer Ausführung einer Aktualisierung einer Ausführungsform einer Schaltungsanordnung; und
- FIG 4: ein weiteres schematisches Ablaufdiagramm gemäß einer Ausführungsform zum Aktualisieren einer Schaltungsanordnung gemäß dem Ausführungsbeispiel aus FIG 2.

In den Figuren sind gleiche oder funktionsgleiche Elemente mit den gleichen Bezugszeichen versehen.

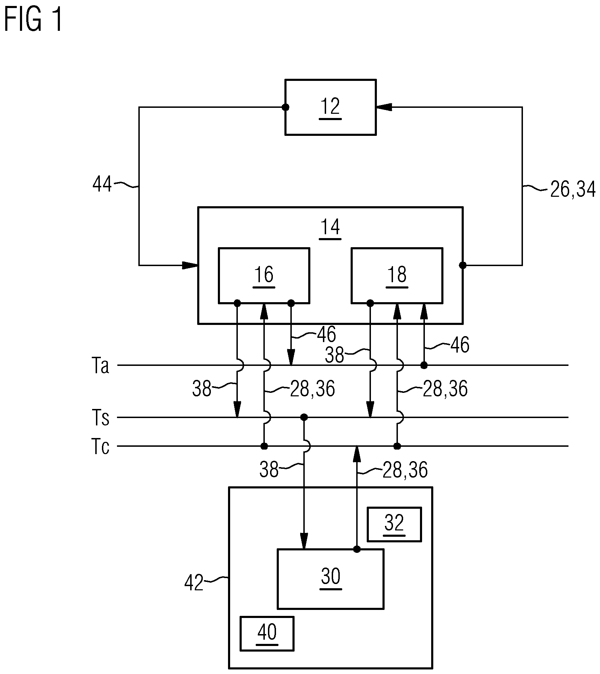

FIG 1 zeigt ein schematisches Blockschaltbild gemäß einer Ausführungsform einer Schaltungsanordnung 10 zum Steuern einer Maschine 12. Die Schaltungsordnung 10 weist im vorliegenden Ausführungsbeispiel zumindest eine erste elektronische Recheneinrichtung 14 auf. Die erste elektronische Recheneinrichtung 14 weist im vorliegenden Ausführungsbeispiel eine erste versionsältere Kontrollfunktion 16 sowie eine erste versionsneuere Kontrollfunktion 18 auf.

Insbesondere soll mit dem erfindungsgemäßen Verfahren zum Aktualisieren beispielsweise die erste versionsältere Kontrollfunktion 16 der ersten elektronischen Recheneinrichtung 14 aktualisiert werden und im Wesentlichen durch die erste versionsneuere Kontrollfunktion 18 ersetzt werden. Hierzu ist insbesondere vorgesehen, dass ein erstes Steuersignal 26 zum Steuern der Maschine 12 mittels der ersten versionsälteren Kontrollfunktion 16 erzeugt wird. Es wird die erste versionsneuere Kontrollfunktion 18 zum Steuern der Maschine 12 parallel zur ersten versionsälteren Kontrollfunktion 16 mittels der ersten elektronischen Recheneinrichtung 14 bereitgestellt. Es wird ein Umschaltsignal 28 von einer Umschaltfunktion 30 der Schaltungsanordnung 10 an die erste elektronische Recheneinrichtung 14 übermittelt. Es wird die aktualisierte erste Kontrollfunktion 32 mittels der ersten elektronischen Recheneinrichtung 14 empfangen. Es erfolgt das Erzeugen eines aktualisierten Steuersignals 34 zum Steuern der Maschine 12 mittels der ersten versionsneueren Kontrollfunktion 18 in Abhängigkeit von dem empfangenen Umschaltsignal 28.

Insbesondere kann beispielsweise nach dem Aktualisieren die erste versionsältere Kontrollfunktion 16 von der ersten elektronischen Recheneinrichtung gelöscht werden.

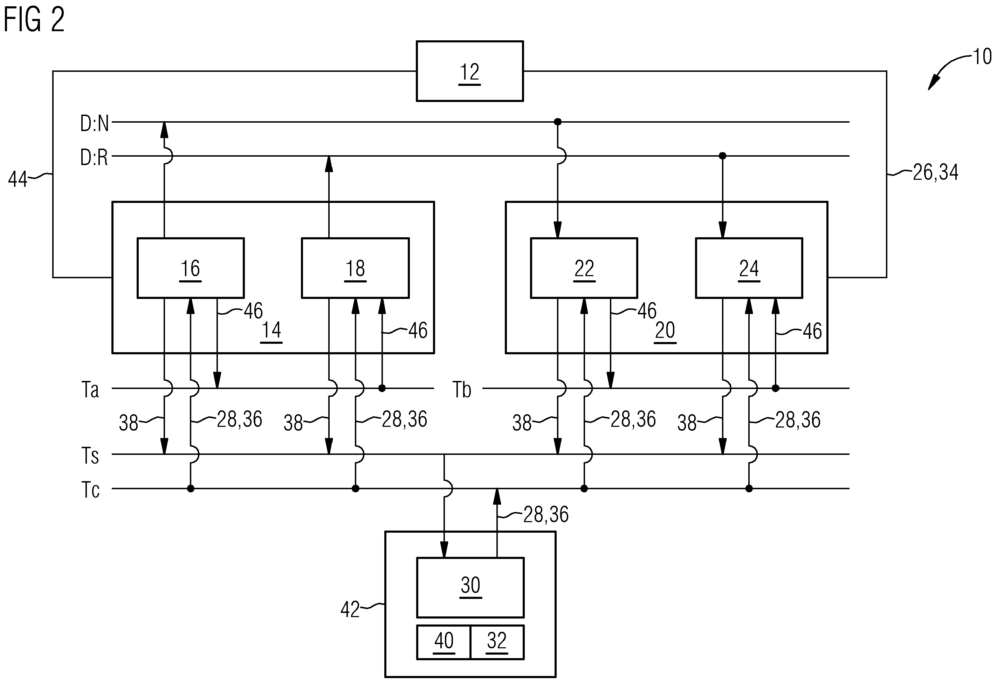

FIG 2 zeigt im Wesentlichen einen ähnlichen Aufbau, wie die FIG 1, jedoch mit einer zweiten elektronischen Recheneinrichtung 20. Die zweite elektronische Recheneinrichtung 24 weist eine zweite versionsältere Kontrollfunktion 22 und eine zweite versionsneuere Kontrollfunktion 24 auf. Die FIG 1 und 2 zeigen ferner eine dritte elektronische Recheneinrichtung 42, wobei durch die dritte elektronische Recheneinrichtung 42 zumindest die Umschaltfunktion 30 gegeben ist. ferner ist gezeigt, dass von der Maschine 12 wiederum ein Signal 44 beispielsweise an die erste elektronische Recheneinrichtung 14 übermittelt werden können. Des Weiteren ist eine Datenpaket 32 im vorliegenden Ausführungsbeispiel der dritten elektronischen Recheneinrichtung 42 zugeordnet. Das Datenpaket 32 kann beispielsweise die Daten der versionsneueren Kontrollfunktion 18, 24 aufweisen und diese den elektronischen Recheneinrichtungen 12, 20 als Download 36 zur Verfügung stellen.

Dabei zeigt die FIG 2 ferner Kommunikationskanäle D:N und D:R, welche von den elektronischen Recheneinrichtungen 14, 20 zur Maschine 12 verlaufen.

Des Weiteren sind Kommunikationskanäle Tₐ, T_{b} gezeigt, auf Basis dessen die elektronischen Recheneinrichtungen 14, 20, insbesondere deren Kontrollfunktionen 16, 18, 22, 24, miteinander kommunizieren können und Kommunikationssignale 46 aneinander übermitteln können. Ferner ist ein Kommunikationskanal Tₛ gezeigt, um die entsprechenden Aktualisierungen von den Kontrollfunktionen 16, 18, 22, 24 an die Umschaltfunktion 30 zu übertragen. Des Weiteren ist ein weiterer Kommunikationskanal T_{c} gezeigt, um die entsprechenden Aktualisierungskommandos von der Umschaltfunktion 30 an die elektronischen Recheneinrichtungen 14, 20 zu übermitteln.

Beispielsweise kann vorgesehen sein, dass eine Bereitschaftsinformation 38 zur Übernahem der Steuerung der Maschine 12 von der ersten versionsneueren Kontrollfunktion 16 an die Umschaltfunktion 30 übermittelt werden.

Dabei zeigt die FIG 2 insbesondere, dass eine koordinierte, verteilte und konsistente Aktualisierung von versionsälteren Kontrollfunktionen 16, 22, die zur selben Schaltungsanordnung 10 gehören, aus mehreren Gründen durchzuführen ist. Zum einen können unterschiedliche Automationsfunktionen/Kontrollfunktionen 16, 18, 22, 24 und unterschiedliche Versionen der gleichen Kontrollfunktion 16, 18, 22, 24 im Allgemeinen unterschiedliche Vorbereitungs-, Start- und Abschaltzeiten aufweisen. In-Field-Tests von den sogenannten sekundären Kontrollfunktionen 18, 24 einer verteilten Aktualisierung erfordern im Allgemeinen unterschiedlichen Ausführungszeiten. Die Koordinierung der Aktualisierung ist dabei die Aufgabe der Umschaltfunktion 30.

Die Umschaltfunktion 30 erhält dabei aktualisierungsrelevante Zustandsdaten von den primären und sekundären Kontrollfunktionen 16, 18 und 22, 24 über den Kommunikationskanal und sendet Aktualisierungsbefehle an die primären und sekundären Kontrollfunktionen 16, 18 und 22, 24 über den Kommunikationskanal T_{c}. Die Kommunikationskanäle Tₐ und T_{b} sind für den Austausch der Kontrollfunktionen 16, 18 und 22, 24 zwischen den Paaren von Kontrollfunktionen 16, 18 und 22, 24 in den verschiedenen Versionen vorgesehen. Zustandsbewusste Kontrollfunktionen 16, 18 und 22, 24 können die Kommunikationskanäle Tₐ und T_{b} beispielsweise zum Austauschen von Zustandsdaten zwischen den Kontrollfunktionen 16, 18 und 22, 24 während der Vorbereitung für den Versionswechsel verwenden.

Insbesondere kann somit vorgesehen sein, dass auch nach dem Aktualisieren der ersten Kontrollfunktion 16, 22 eine Übernahmeinformation zur Übernahem der Steuerung durch die erste versionsneuere Kontrollfunktion 18 an die Umschaltfunktion übermittelt wird. Des Weiteren zeigen die FIG 1 und FIG 2 insbesondere, dass die Schaltungsanordnung 10 als eine Publish-Subscribe-Architektur bereitgestellt wird.

Ferner kann vorgesehen sein, dass die Schaltungsanordnung 10 mit zumindest der zweiten elektronischen Recheneinrichtung 20 zum Steuern der Maschine 12 bereitgestellt wird, wobei die zweite elektronische Recheneinrichtung 20 abhängig vom ersten Steuersignal 26 der ersten elektronischen Recheneinrichtung 14 ist. Dabei kann eine Aktualisierung der zweiten versionsälteren Kontrollfunktion 22 der zweiten elektronischen Recheneinrichtung 20 zeitlich nach dem Aktualisieren der ersten versionsälteren Kontrollfunktion 16 der ersten elektronischen Recheneinrichtung 14 erfolgen. Ferner kann vorgesehen sein, dass eine Aktualisierung der zweiten versionsälteren Kontrollfunktion 22 der zweiten elektronischen Recheneinrichtung 20 in Abhängigkeit von einer Steuerung durch die Umschaltfunktion 30 durchgeführt wird. Die Aktualisierung zumindest der Kontrollfunktionen 16, 18, 22, 24 der zumindest zwei elektronischen Recheneinrichtungen 14, 20 kann dabei insbesondere in Abhängigkeit von einem Abhängigkeitsplan 40 der elektronischen Recheneinrichtungen 14, 20 zueinander mittels der Umschaltfunktion 30 erfolgen.

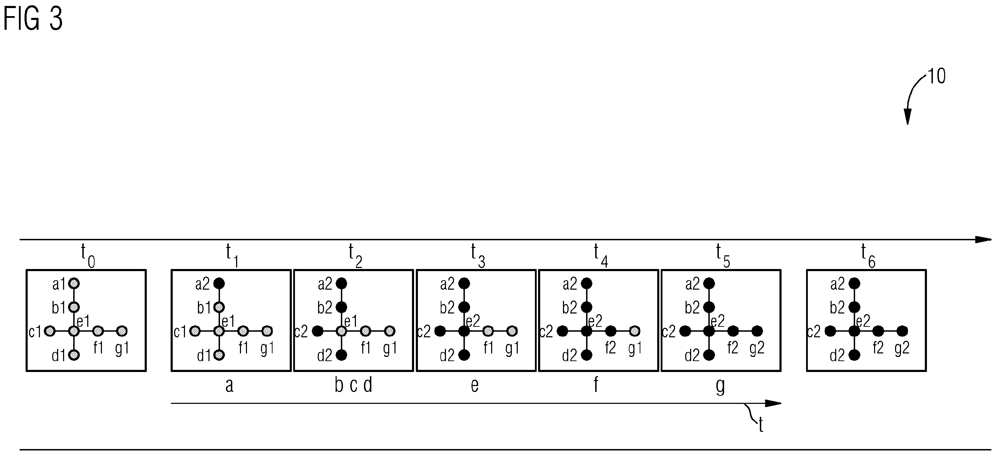

FIG 3 zeigt dabei ein weiteres schematisches Blockschaltbild gemäß eines Aktualisierungsprozesses für eine Schaltungsanordnung 10 zu sechs verschiedenen Zeitpunkten. Die Schaltungsanordnung 10 weist im vorliegenden Ausführungsbeispiel unterschiedliche Nodes a, b, c, d, e, f, g auf. Die Nodes a, b, c, d, e, f, g entsprechen dabei beispielsweise jeweils den elektronischen Recheneinrichtungen 14, 20 aus FIG 1 beziehungsweise FIG 2 und werden nur aus Übersichtlichkeitsgründen hier anders bezeichnet. Mit a1 ist beispielsweise die erste elektronische Recheneinrichtung 14 bezeichnet, die mit der ersten versionsälteren Kontrollfunktion 16 ausgebildet ist. Mit a2 wiederum ist beispielsweise bezeichnet die erste elektronische Recheneinrichtung 14 mit der aktualisierten ersten versionsneueren Kontrollfunktion 18. Dies gilt in der FIG 3 im weiteren Verlauf dann auch für die weiteren Nodes b, c, d, e, f, g bezeichnet sind. Beispielsweise kann mit b1 die zweite elektronische Recheneinrichtung 20 mit der zweiten versionsälteren Kontrollfunktion 22 bezeichnet sein. Mit c1 kann eine weitere elektronische Recheneinrichtung bezeichnet sein.

Die FIG 3 zeigt insbesondere, dass beispielsweise zum Zeitpunkt t0 keine der Nodes a, b, c, d, e, f, g entsprechend aktualisiert wurde. Zum Zeitpunkt t1 wurde die Node a von a1 zu a2 entsprechend aktualisiert, da beispielsweise diese Node a als vorrangige Node für die weiteren Nodes b, c, d, e, f, g angesehen wird. Im zweiten Zeitschritt t2 werden wiederum die Nodes b, c, und d aktualisiert, da sich diese insbesondere auf der gleichen Datenflussebene befinden. Im dritten Zeitpunkt t3 wird lediglich die Node e entsprechend aktualisiert. Im vierten Zeitpunkt t4 wird die Node f aktualisiert und im fünften Zeitpunkt t5 wird die Node g aktualisiert. Zum sechsten Zeitpunkt t6 sind dann wiederum alle Nodes a, b, c, d, e, f, g der vorliegenden Schaltungsanordnung 10 entsprechend aktualisiert.

Insbesondere zeigt somit die FIG 3, dass die Schaltungsanordnung 10 mit einer Vielzahl von elektronischen Recheneinrichtungen/Nodes a, b, c, d, e, f, g zum Steuern der Maschine 12 bereitgestellt wird, wobei die Aktualisierung der Vielzahl von elektronischen Recheneinrichtungen/Nodes a, b, c, d, e, f, g in Abhängigkeit von beispielsweise dem Abhängigkeitsplan 40 der elektronischen Recheneinrichtungen/Nodes a, b, c, d, e, f, g zueinander mittels der Umschaltfunktion 30 durchgeführt wird. Dabei werden insbesondere im Datenfluss vorrangige Kontrollfunktionen, vorliegend beispielsweise der Node a, zeitlich vor nachrangigen Kontrollfunktionen, vorliegend beispielsweise de Nodes b, c, d, e, f, g aktualisiert. Des Weiteren können Kontrollfunktionen von elektronischen Recheneinrichtungen im vorliegenden Ausführungsbeispiel beispielsweise die Nodes b, c, d, gleicher Datenflussebene gleichzeitig aktualisiert werden. Hierzu kann insbesondere ein Taktsignal beispielsweise für die Umschaltfunktion 30 vorgegeben werden.

Insbesondere zeigt somit die FIG 3, dass auch aktualisierbare Kontrollfunktionen 16, 18, 22, 24 in Ketten voneinander abgestimmt paarweise aktualisiert werden können, das heißt zwischen Paaren von versionsälteren und aktualisierten Versionen der gleichen Kontrollfunktion 16, 18, 22, 24, beginnend mit der "Wurzelkontrollfunktion" in einer Kette von aufeinander abgestimmten Kontrollfunktionen 16, 18, 22, 24 und endend mit dem letzten "Blatt" entsprechend aktualisiert werden. In jeder Teilkette einer Gruppe von aufeinander abgestimmten Kontrollfunktionen 16, 18, 22, 24 , wie in der FIG 3 gezeigt, werden Vorfahr-Kontrollfunktionen vor Nachfolge-Kontrollfunktionen aktualisiert, das heißt die Node b und c werden beispielsweise vor der Node e aktualisiert. Die Umschaltfunktion 30 löst die Aktualisierungen der Wurzelkontrollfunktion längerer Teilketten vor Aktualisierungen der Wurzel-Kontrollfunktionen kürzerer Teilketten aus, das heißt die Node a wird vor der Node c und d aktualisiert. Durch die Aktualisierung von der Node a, einem Systemzyklus vor c und d, wird ein konsistenter Austausch der Ränge vor der Node e ermöglicht. Aktualisierungen entlang aller Kommunikationspfade gleicher Länge dauern gleichlang an und sind daher konsistent. Dies ist eine Eigentümlichkeit und Folge einer entsprechenden Schaltungsanordnung 10, wie bereits beschrieben. Die Sequenzinformation ist in Aktualisierungsplänen für die Umschaltfunktion 30 für aufeinander abgestimmte Kontrollfunktionen 16, 18, 22, 24 kodiert, um die koordinierte In-Field-Aktualisierung zu steuern und zu überwachen. Sobald alle aktualisierbaren Kontrollfunktions-Instanzen im Umschaltzustand sind und zu paarweisem Austausch ihrer Ränge bereit sind, löst die gemeinsame Auslösefunktion eine Aktualisierung aus, wie dies in der FIG 3 skizziert ist.

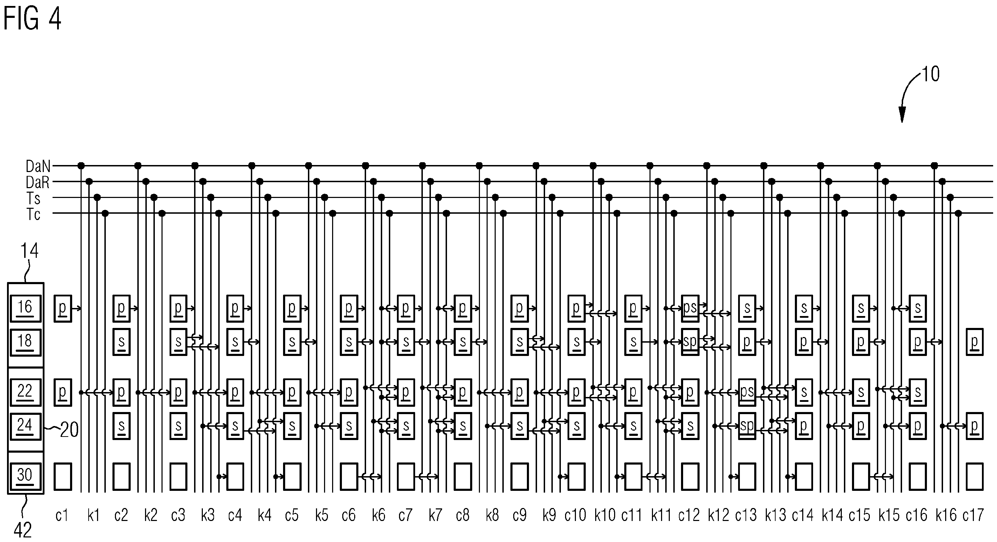

FIG 4 zeigt wiederum ein schematisches Ablaufdiagramm gemäß einer Aktualisierung gemäß der Systemanordnung 10 aus FIG 2. Vorliegend sind insbesondere die erste versionsältere

Kontrollfunktion 16, die erste versionsneuere zweite Kontrollfunktion 18, die zweite versionsältere Kontrollfunktion 22 sowie die zweite versionsneuere Kontrollfunktion 24 gezeigt. Dabei ist insbesondere mit dem Buchstaben P gekennzeichnet, dass es sich dabei um die primäre Steuerungsfunktion für die Maschine 12 handelt, mit anderen Worten werden die Steuersignale 26 durch diese Instanz für die Maschine 12 erzeugt. Mit dem Buchstaben S ist die sekundäre Instanz gezeigt, mit anderen Worten erfolgt hierbei nicht die direkte Steuerung über diese Instanz, sondern lediglich redundant im Hintergrund, ohne dabei wirkliche Steuersignale 26 zu erzeugen. Mit dem Buchstaben c sind insbesondere die jeweiligen Kontrollfunktionen 16, 18, 22, 24 dargestellt und mit dem Buchstaben k sind die Kommunikationswege dargestellt. Insgesamt sind 17 Zeitschritte gezeigt. Des Weiteren ist mit der Buchstabenkombination PS der Umschaltmoment zwischen der primären zur sekundären Funktion gezeigt. Mit der Buchstabenfolge SP ist das Umschalten von der sekundären zur primären Steuerungsfunktion gezeigt.

Ein verteilter, nahtloser und konsistenter Aktualisierungsvorgang von zwei aufeinander abgestimmten Kontrollfunktionen 16, 18, 22, 24 läuft dabei in mehreren Schritten ab, wie dies im vorliegenden Ausführungsbeispiel für die Kontrollfunktionen 16, 18, 22, 24 aus FIG 2 dargestellt ist. In der FIG 4 verhält sich jede Instanz von Kontrollfunktionen 16, 18, 22, 24, wie ein entsprechender Zustandsautomat. Die FIG 4 zeigt Teile der Interaktionssequenz zwischen der Schaltungsanordnung 10 rund um eine verteilte Aktualisierung von zwei abhängigen, kommunizierenden Kontrollfunktionen 16, 18, 22, 24, insbesondere mit den versionsälteren und den versionsneueren Kontrollfunktionen. Parallele Aktivitäten in parallellaufenden Instanzen von Kontrollfunktionen 16, 18, 22, 24 werden von oben nach unten angeordnet. Sequentielle Aktivitäten in aufeinanderfolgenden Systemzyklen werden von links nach rechts angeordnet, entsprechend dem Zeitfluss, abwechselnd zwischen den entsprechenden Rechenelementen cᵢ in Instanzen von Kontrollfunktionen 16, 18, 22, 24 und Kommunikationselementen kᵢ in der Nachrichteninfrastruktur. Ein Systemzyklus einer Schaltungsanordnung 10 ist, vom Rechenstandpunkt aus gesehen, mit cᵢ mit i = 1, 2, ..., und vom Standpunkt der Kommunikation mit kᵢ mit i = 1, 2, ... bzeichnet.

In der FIG 4 charakterisieren Strukturen Sᵢ und Nachrichten Mᵢ eine verteilte, nahtlose und konsistente Aktualisierung. In der Regel wird eine verteilte Aktualisierung jedoch nicht in einer so strengen Reihenfolge ablaufen. Als erstes Beispiel können nachfolgende Versionen sekundärer Instanzen von Kontrollfunktionen 16, 18, 22, 24 nach einem erfolgreichen Start mehrerer Systemzyklen parallel zu ihren primären Instanzen laufen, wie dies beispielsweise in c5 k5, c5 k5, c5... gezeigt ist, wo diese beispielsweise im Feldtest oder einfach im Stand by-Modus betrieben werden, bevor eine verteilte Aktualisierung mit c7 k7 beginnt.

Ein zweites Beispiel kann in ähnlicher Weise sein, dass c5 k5, c5, mehrmals auftreten, nachdem die Umschaltfunktion 30 den Aktualisierungsplan in c6 k6 verteilt hat, oder die Umschaltfunktion 30 aktualisiert den Aktualisierungsplan einmal oder mehrere Male, bevor eine verteilte Aktualisierung mit c6 k6 beginnt, wie in der Sequenz c6 k6, c5 k5, c5 k5 ... c6 k6, c5 k5, c5 k5 ... c7 k7 gezeigt.

Ein drittes Beispiel kann die Anforderung zur Freigabe von Ressourcen und zum Löschen früherer Versionen von Kontrollfunktionen 16, 18, 22, 24 in c15 k15, c16 k16 optional darstellen. Frühere Versionen können eine Weile parallel zu späteren Versionen laufen, zum Beispiel für potentielle Downgrades im Falle von Feldtests der nächsten beziehungsweise neueren Versionen von Kontrollfunktionen 16, 18, 22, 24, die Probleme aufzeigen. Ob frühere Kontrollfunktions-Versionen weiterlaufen oder beendet werden, ist im Aktualisierungsplan kodiert.

In einem vierten Beispiel können Instanzen verschiedener Kontrollfunktionen 16, 18, 22, 24 für einen Versionswechsel im selben Systemzyklus bereit sein, wie beispielsweise die Kontrollfunktionen 16, 18, 22, 24 in c9. Oft sind diese jedoch für einen Versionswechsel in unterschiedlichen Systemzyklen bereit. Dies wird den verteilten Aktualisierungsvorgang nicht beeinträchtigen, abgesehen davon, dass der Aktualisierungsprozess länger dauert als beispielsweise in der FIG 4 skizziert. Der Aktualisierungsvorgang in FIG 4, insbesondere der Versionswechsel den die Umschaltfunktion 30 in c11 k11 auslöst und der mit k13 c14 endet, läuft in engen, überschneidenden Sequenzen für jedes Paar aufeinander abgestimmter Kontrollfunktionen 16, 18, 22, 24 ab.

In einem Beispiel zu FIG 3 gibt es beispielsweise 6 Paare von aufeinander bezogenen Kontrollfunktionen 16, 18, 22, 24. Jedes Paar von zwei direkt zusammenhängenden Kontrollfunktionen 16, 18, 22, 24 wechselt die Version, wie dies in der FIG 4 dargestellt ist. Die sechs Paare von sieben Kontrollfunktionen 16, 18, 22, 24 mit 14 Instanzen von Kontrollfunktionen 16, 18, 22, 24 benötigen nur fünf Systemzyklen für einen nahtlosen und konsistenten Versionswechsel. Der Grund dafür ist, dass die in der FIG 3 skizzierten Konfiguration Nodes b, c und d unabhängig voneinander sind und sich daher in einem Systemzyklus umschalten können. Die Anzahl der Systemzyklen, die für eine vollständige verteilte Aktualisierung benötigt werden, entspricht der Länge des längsten End-to-End-Pfads durch einen gerichteten azyklischen Graphen, den eine Gruppe von Kontrollfunktionen 16, 18, 22, 24 aufbaut, das heißt fünf für die Gruppe gemäß FIG 3. Damit dies funktioniert, muss ein Aktualisierungsplan Befehle zum Umschalten der Versionen der Stamm-Kontrollfunktion in der richtigen Reihenfolge sequenzieren, um Inkonsistenzen während der Umschaltphase einer verteilten nahtlosen und konsistenten Aktualisierung zu vermeiden.

Der vorgeschlagenen Ansatz ermöglicht insbesondere gegenüber dem Stand der Technik das Aktualisieren von zwei oder mehr linear abhängiger Automatisierungsfunktionen beziehungsweise Kontrollfunktionen 16, 18, 22, 24 eines zeitgetriggerten, verteilten Cyber-physischen Systems, insbesondere der Schaltungsanordnung 10, insbesondere unter der Aufsicht der Umschaltfunktion 30, welche eine allgemeine Rechner-Kontrollfunktion mit spezieller Funktion ist, die insbesondere orthogonal in der Schaltungsanordnung 10 integriert und mit Aktualisierungsplänen parametrisiert werden kann. Des Weiteren ist erfindungsgemäß die Unterstützung von In-Field-Tests ermöglicht, sodass eine sichere Aktualisierung während der Aktualisierungsphasen gewährleistet ist.

Dies führt insbesondere zu den Vorteilen, dass Aktualisierungen mehrerer, miteinander verbundener Teile der Schaltungsanordnung 10 realisiert werden können, während die Maschine 12 weiterhin betrieben wird und somit dauerhaft Kundennutzen auch während der Anpassungen von Schaltungsanordnungen 10 an veränderte Umgebungen schafft. Dadurch können sofortige nahtlose Übergänge kontrollierter physikalischer Prozesse während dieser Aktualisierung realisiert werden. Des Weiteren ist eine Aktualisierung mehrerer miteinander verbundener Teile der Kontrollfunktionen 16, 18, 22, 24 ermöglicht, wenn erforderlich. Weiterhin kann auch ein automatisches Aufzeichnen aller mit der Aktualisierung zusammengehörender Daten und Vorgänge über die Aktualisierungsfunktion, insbesondere die Umschaltfunktion 30 für beispielsweise Audits und Abweichungsanalysen bereitgestellt werden.

### Bezugszeichenliste

- 10: Schaltungsanordnung
- 12: Maschine
- 14: erste elektronische Recheneinrichtung
- 16: erste versionsältere Kontrollfunktion
- 18: erste versionsneuere Kontrollfunktion
- 22: zweite versionsältere Kontrollfunktion
- 24: zweite versionsneuere Kontrollfunktion
- 26: Steuersignal
- 28: Umschaltsignal
- 30: Umschaltfunktion
- 32: Datenpaket
- 34: aktualisiertes Steuersignal
- 36: Download
- 38: Bereitschaftsinformation
- 40: Abhängigkeitsplan
- 42: dritte elektronische Recheneinrichtung
- 44: Signal
- 46: Kommunikationssignal
- D:N: Kommunikationskanal
- D:R: Kommunikationskanal
- Tₐ: Kommunikationskanal
- T_{b}: Kommunikationskanal
- T_{S}: Kommunikationskanal
- T_{C}: Kommunikationskanal
- t0-t6: Zeitpunkte
- a, b, c, d, e, f,: g Node
- P: primäre Steuerungsfunktion
- S: sekundäre Steuerungsfunktion
- c: Kontrolleinrichtungen
- k: Kommunikationseinrichtungen

## Patentansprüche

1. Verfahren zum Aktualisieren zumindest einer Kontrollfunktion (16) einer ersten elektronischen Recheneinrichtung (14) in einer Schaltungsanordnung (10) zum Steuern einer Maschine (12), mit den Schritten:
- Erzeugen eines ersten Steuersignals (26) zum Steuern der Maschine (12) mittels der ersten versionsälteren Kontrollfunktion (16) der ersten elektronischen Recheneinrichtung (14);
- Bereitstellen einer ersten versionsneueren Kontrollfunktion (18) zum Steuern der Maschine (12) parallel zur ersten versionsälteren Kontrollfunktion (16) mittels der ersten elektronischen Recheneinrichtung (14);
- Erzeugen und Übermitteln eines Umschaltsignals (28) von einer Umschaltfunktion (30) der Schaltungsanordnung (10) an die erste elektronische Recheneinrichtung (14); und
- Erzeugen eines aktualisierten Steuersignals (34) zum Steuern der Maschine (12) mittels der ersten versionsneueren Kontrollfunktion (18) in Abhängigkeit von dem empfangenen Umschaltsignal (28).

2. Verfahren nach Anspruch 1, **dadurch gekennzeichnet, dass**
eine Bereitschaftsinformation (38) zum Übernehmen der Steuerung durch die erste versionsneuere Kontrollfunktion (18) an die Umschaltfunktion (30) übermittelt wird und das Umschaltsignal (28) erst nach dem Empfangen der Bereitschaftsinformation (38) durch das Umschaltfunktion (30) erzeugt und übermittelt wird.

3. Verfahren nach Anspruch 1 oder 2, **dadurch gekennzeichnet, dass** eine Übernahmeinformation, dass die Steuerung durch die erste versionsneuere Kontrollfunktion (18) übernommen wurde, von der ersten elektronischen Recheneinrichtung (14) an die Umschaltfunktion (30) übermittelt wird.

4. Verfahren nach einem der vorhergehenden Ansprüche, **dadurch gekennzeichnet, dass** die Schaltungsanordnung (10) als eine Publish-Subscribe-Architektur bereitgestellt wird.

5. Verfahren nach einem der vorhergehenden Ansprüche, **dadurch gekennzeichnet, dass** die Schaltungsanordnung (10) mit zumindest einer zweiten elektronischen Recheneinrichtung (20) zum Steuern der Maschine (12) bereitgestellt wird, wobei die zweite elektronische Recheneinrichtung (20) abhängig vom ersten Steuersignal (26) der ersten elektronischen Recheneinrichtung (14) ist.

6. Verfahren nach Anspruch 5, **dadurch gekennzeichnet, dass**
ein Umschalten zu einer zweiten versionsneueren Kontrollfunktion (24) der zweiten elektronischen Recheneinrichtung (20) zeitlich nach dem Umschalten zur ersten versionsneueren Kontrollfunktion (18) durchgeführt wird.

7. Verfahren nach Anspruch 6, **dadurch gekennzeichnet, dass**
ein Umschalten der zweiten versionsälteren Kontrollfunktion (22) zur zweiten versionsneueren Kontrollfunktion (24) in Abhängigkeit von einer Steuerung durch die Umschaltfunktion (30) durchgeführt wird.

8. Verfahren nach Anspruch 7, **dadurch gekennzeichnet, dass**
ein Umschalten der versionsälteren Kontrollfunktionen (16, 22) zu den versionsneueren Kontrollfunktionen (18, 24) der zumindest zwei elektronischen Recheneinrichtungen (14, 20) in Abhängigkeit von einem Abhängigkeitsplan (40) der elektronischen Recheneinrichtungen (14, 20) zueinander mittels der Umschaltfunktion (30) durchgeführt wird.

9. Verfahren nach einem der vorhergehenden Ansprüche, **dadurch gekennzeichnet, dass** die Schaltungsanordnung (10) mit einer Vielzahl von elektronischen Recheneinrichtungen zum Steuern der Maschine (12) bereitgestellt wird, wobei die Aktualisierung der Vielzahl von elektronischen Recheneinrichtungen in Abhängigkeit von einem Abhängigkeitsplan (40) der elektronischen Recheneinrichtungen zueinander mittels der Umschaltfunktion (30) durchgeführt wird.

10. Verfahren nach Anspruch 9, **dadurch gekennzeichnet, dass**
in einem sequentiellen Datenfluss vorrangige Kontrollfunktionen (16, 18, 22, 24) zeitlich vor nachrangigen Kontrollfunktionen (16, 18, 22, 24) aktualisiert werden.

11. Verfahren nach Anspruch 9 oder 10, **dadurch gekennzeichnet, dass**
im Datenfluss gleichrangige Kontrollfunktionen (16, 18, 22, 24) von elektronischen Recheneinrichtungen gleichzeitig aktualisiert werden.

12. Verfahren nach einem der vorhergehenden Ansprüche, **dadurch gekennzeichnet, dass** zumindest die erste versionsneuere Kontrollfunktion (18) vor einer Übernahme der Steuerung getestet wird.

13. Computerprogrammprodukt mit Programmcodemitteln zum Durchführen eines Verfahrens nach einem der Ansprüche 1 bis 12.

14. Computerlesbares Speichermedium mit zumindest einem Computerprogrammprodukt nach Anspruch 13.

15. Schaltungsanordnung (10) zum Steuern einer Maschine (12), mit zumindest einer ersten elektronischen Recheneinrichtung (14) und einem Aktualisierungsmodul (30), wobei die Schaltungsanordnung (10) zum Durchführen eines Verfahrens nach einem der Ansprüche 1 bis 12 ausgebildet ist.
